(19) Europäisches Patentamt

European Patent Office

Office européen des brevets

(11) **EP 1 403 035 B1**

(12) **EUROPEAN PATENT SPECIFICATION**

(45) Date of publication and mention
of the grant of the patent:
**08.11.2006 Bulletin 2006/45**

(51) Int Cl.:
***B32B 5/02*** *(2006.01)*        ***B32B 27/02*** *(2006.01)*

(21) Application number: **02713181.2**

(22) Date of filing: **20.03.2002**

(86) International application number:
**PCT/JP2002/002724**

(87) International publication number:
**WO 2002/076722 (03.10.2002 Gazette 2002/40)**

(54) **HIGH MOISTURE ABSORBING NONWOVEN FIBER STRUCTURE AND PRODUCTION METHOD THEREFOR**

FASERVLIESSTOFFSTRUKTUR MIT HOHER FEUCHTIGKEITSAUFNAHME UND HERSTELLUNGSVERFAHREN DAFÜR

STRUCTURE NON TISSEE DE FIBRES ABSORBANT FORTEMENT L'HUMIDITE ET SON PROCEDE DE PRODUCTION

(84) Designated Contracting States:
**AT BE CH CY DE DK ES FI FR GB GR IE IT LI LU MC NL PT SE TR**

(30) Priority: **22.03.2001 JP 2001082135**

(43) Date of publication of application:
**31.03.2004 Bulletin 2004/14**

(73) Proprietor: **Teijin Fibers Limited**
**osaka-shi, Osaka 541-0054 (JP)**

(72) Inventors:
• **WATANABE, Noboru**
  **Sabae-shi, Fukui 916-0015 (JP)**
• **ARAKI, Tadashi**
  **Hofu-shi, Yamaguchi 747-0823 (JP)**
• **MOMOI, Naomichi**
  **Kawanishi-shi, Hyogo 666-0034 (JP)**

(74) Representative: **Morf, Jan Stefan et al**
**Abitz & Partner,**
**Poschingerstrasse 6**
**81679 München (Bogenhausen) (DE)**

(56) References cited:
**WO-A-99/00268**          **JP-A- 3 231 662**
**JP-A- 7 145 208**          **JP-A- 8 296 162**
**JP-A- 9 217 268**          **JP-A- 9 327 479**
**JP-U- 3 043 353**          **NL-C- 1 016 514**

• **DATABASE WPI Section Ch, Week 199419 Derwent Publications Ltd., London, GB; Class A96, AN 1994-155954 XP002313370 & JP 06 098909 A (KAO CORP) 12 April 1994 (1994-04-12)**

**EP 1 403 035 B1**

## Description

Technical Field:

The present invention relates to a high moisture absorbent nonwoven fabric structure. More particularly, it relates to a high moisture absorbent nonwoven fabric structure which has high moisture absorption capacity and is suitably used as drying agents used in transportation of precision parts, dew condensation preventing agents for industrial equipments, drying agents for eliminating moisture in bags for confectioneries, demoisturizers and the like, and its preparation.

Background Art:

As electronic parts such as silicon wafers cannot be used even when slightly rusted, close attention is paid for their transportation. Electronic parts are put in a tightly closed container together with a drying agent for transportation as they are apt to rust when the humidity comes higher. As the drying agent, silica gel is mainly used at present. Though silica gel can be recycled by heat treatment, it has problems of heat treating cost and breakage of particles during heat treatment. Hence, the silica gel drying agent is usually discarded after use. Though incineration or reclamation is used as the discarding method, the treatment shall be performed in a large amount and various problems such as incineration cost or lack of land to be reclaimed arise and thus materials easily reusable are desired.

Though silica gel has been used for dew condensation prevention of industrial equipment in almost all cases, silica gel has a disadvantage of bulkiness as it is used in particle form. On the other hand, miniaturization of dew condensation inhibitor is desired accompanied to miniaturization of equipment.

Silica gel and deliquescent salts such as calcium chloride are used as the drying agent and dehumidifying agent for confectioneries. Although they are disposed as non-inflammable refuse in average home, there are problems such as lack of land to be reclaimed and thus reduction in quantity is desired. Further, deliquescent salts become liquid by moisture absorption and are in danger of leaking from packing papers and in addition in danger of generating heat when water is added to cause a burn.

On the other hand, the moisture absorbent nonwoven fabric is commonly prepared by a procedure in which high moisture absorbent fibers are mixed with other synthetic fibers and/or natural fibers and carded and needle-punched. However, the high moisture absorbent fiber is low in fiber strength and fibers are fell off highly during the manufacturing process at a higher mixing rate and further twine round the machine as they absorb moisture during the manufacturing process disadvantageously. Particularly, the high moisture absorbent fiber of the type wherein the surface gels by absorbing water and/or moisture has low fiber strength and the mixing rate is limited to about 40 weight %.

Other methods for the preparation of moisture absorbent nonwoven fabrics include air laid method. However, in this method, it is required to mix heat fusion welding fibers to adhere the fibers with each other or to adhere the fiber layers with the surface sheets and also it is required to increase the mixing rate of heat fusion welding fibers for keeping the shape.

JP 06 098 909 A discloses an absorbing article, such as a disposable diaper or a sanitary napkin having a liquid permeable front sheet, a liquid impermeable back sheet and an absorbent between these sheets. The absorbent is based on pulp fibers and water-absorbing polymer and contains hydrophilic fibers longer than the pulp fibers and dispersed in the pulp fibers. The water-absorbing polymer may be a crosslinked sodium polyacrylate. The hydrophilic fibers may be rayon, cotton, wool or jute.

The present invention has been made in consideration of the above circumstance and its object is to provide a high moisture absorbent nonwoven fabric which can be easily recycled after use and its preparation method.

The present invention provides a high moisture absorbent nonwoven fabric structure according to claim 1 and a method for the preparation thereof according to claim 5.

A preferred embodiment of the high moisture absorbent nonwoven fabric structure is a high moisture absorbent nonwoven fabric structure in which the moisture-absorbing layer consists only of high moisture absorbent fibers. More preferably, the high moisture absorbent fibers are of a crosslinked sodium acrylate type.

The apparent density of the high moisture absorbent nonwoven fabric structure is preferably 0.05 to 0.8 g/cm$^3$.

Furthermore, the high moisture absorbent nonwoven fabric structure having a three layers structure is preferably prepared through a moistening step and a drying step.

The high moisture absorbent fiber used in the moisture-absorbing layer of the present invention should be such one that the surface gels by absorbing water and/or moisture. Because, when the high moisture absorbent fiber is such one that the surface gels by absorbing water and/or moisture, self-adhering activity is expressed and the fibers in the moisture-absorbing layer adhere each other and the moisture-absorbing layer and the surface sheet adhere each other by the self-adhering activity, and hence any thermal bonding fiber is not required and a higher mixing rate of the high moisture absorbent fibers comes to be possible. When the high moisture absorbent fiber does not gel, self-adhering

2

activity is not expressed and the fibers in the moisture-absorbing layer do not adhere each other and the moisture adhering layer and the surface sheet do not adhere each other and the shape cannot be kept.

The high moisture absorbent nonwoven fabric structure of the present invention shall be of a three layers structure comprising a moisture-absorbing layer and surface sheets with the moisture-absorbing layer between. If the moisture-absorbing layer is exposed on the surface, the high moisture absorbent fibers fall off during production and no stable production can be made.

The material and the shape of the surface sheet used in the present invention are not especially restricted but it is required that a sheet having air permeability is used in at least one side. As the sheet having air permeability, for example, paper sheets such as tissue paper, cloths such as woven and knitted fabrics and nonwoven fabrics, and perforated non-air-permeable films can be used. As the non-air-permeable sheet, a film can be used. The material for surface sheet is preferably one containing no harmful material such as chlorine from the viewpoint of discarding after use.

When sheets having air permeability are used for the both sides of the surface sheet, the moisture-absorbing rate is higher. When a sheet having air permeability is used for one side, the moisture-absorbing surface can be limited to one side. The moisture-absorbing rate can be varied at will by varying properly the air permeability of the air-permeable sheet. When non-air-permeable sheets are used for the both sides, the high moisture absorbent fibers come to not be able to absorb moisture.

The thickness of the high moisture absorbent nonwoven fabric structure of the present invention is required to be not more than 1.5 mm. When the thickness is as thin as not more than 1.5 mm, it can be used in a small gap. It is preferably 0.2 mm to 1.2 mm. more preferably 0.3 mm to 1.0 mm.

The moisture content of the high moisture absorbent nonwoven fabric structure of the present invention is required to be 20 to 45 weight %. Though the nonwoven fabric structure is rolled for transportation and storage, the nonwoven fabric structure comes rigid when the moisture content is lower than 20 weight to cause cracking when rolled. On the other hand, when the moisture content exceeds 45 weight %, the nonwoven fabric structure comes heavier and softer and the thickness and the weight per unit area are in danger of being changed due to its dead load during transportation and storage. At a moisture content of 20 to 45 weight %, it has proper pliancy and there is no danger of %.

Though the high moisture absorbent nonwoven fabric structure can be used as it is, it is preferred to be used after dried to a favorite moisture content according to the purpose of use. The drying method is not particularly restricted. For example, there may be exemplified methods using a hot air drier. a vacuum drier, a hand drier or the like.

The moisture-absorbing rate of the high moisture absorbent nonwoven fabric structure of the present invention shall be at least 20 weight % under an absolute dry condition at 20°C. 65 % RH for 5 hours. Preferably, it is at least 30 weight % under the same condition. When the moisture-absorbing rate is at least 20 weight %, a sufficient performance can be attained as a drying agent or a moisture-removing agent.

Though the mixing rate of the high moisture absorbent fibers used in the moisture-absorbing layer of the present invention is not defined, it is preferably at least 80 weight %. It is particularly preferred to be a moisture-absorbing layer consisting of high moisture absorbent fibers alone.

As the high moisture absorbent fiber in which the surface gels by absorbing water and/or moisture, fibers of crosslinked sodium acrylate type are exemplified. As the practical example, there is exemplified "BELLOASIS" made by Kanebo Gohsen, Ltd.. The fiber has a moisture-absorbing rate of 40 weight % at 20°C, 65 % RH and also has excellent properties of high moisture-absorbing velocity and moisture-releasing velocity.

The high moisture absorbent fiber swells by containing water in a large amount and the fiber surface gels to form mutually a pseudo-adhesion state. Then, the self adhesion between high moisture absorbent fibers is kept by removing water by drying.

Also, the apparent density of the high moisture absorbent nonwoven fabric structure of the present invention is preferably 0.05 to 0.8 g/cm$^3$. More preferably, it is 0. 15 to 0. 5 g/cm$^3$. At an apparent density of 0.05 to 0.8 g/cm$^3$. it is good in form-retaining and excellent in moisture-absorption.

The high moisture absorbent nonwoven fabric structure of the present invention having three layers structure is preferably prepared through a moistening step and a drying step.

The moistening step means a step in which water and/or vapor is absorbed in the high moisture absorbent fibers to make gel of the surface of the high moisture absorbent fibers. When water is used in the moistening step. it is more preferred to give a sucking step immediately after the moistening step.

The drying step in the present invention means a step in which water absorbed in the moistening step is removed and the gel portion of the high moisture absorbent fibers are restored to the original condition to adhere the fibers in the moisture-absorbing layer mutually and adhere the moisture-absorbing layer with the surface sheets. As the drying means, there are exemplified a heating furnace, a hot air drier and heating roller, and it is preferred to dry at 80 to 150 °C.

Now, the method for the preparation of the high moisture absorbent nonwoven fabric of the present invention will be illustrated.

In the manufacturing method of the present invention, a surface sheet having air permeability is placed on a net and a fiber mixture mainly containing high moisture absorbent fibers are scattered continuously on the surface sheet

while sucked from net side to form a moisture-absorbing layer. Then, water and/or vapor is absorbed ( moistening step is applied ) on the moisture-absorbing layer to induce gelation of the surface of the high moisture absorbent fibers. Then, another surface sheet is laminated on it to give a three layers structure and then it is pressed and dried to adhere the fibers in the moisture-absorbing layer each other and adhere the moisture-absorbing layer with the surface sheet to give a high moisture absorbent nonwoven fabric structure.

When water is used in the moistening step, it is preferred to carry out a step of sucking from lower side immediately after the moistening step. Or, it is preferred water is scattered from the lower side to improve adhesion to the lower surface sheet.

Examples:

Now, the present invention will be illustrated in details by Examples and Comparative Examples as follows.

The test method for moisture-absorbing rate is shown as follows.

(Test for moisture-absorbing rate)

A sample was dried in a hot air drier at 120°C for 2 hours and stood in an air-conditioned chamber at 20°C and 65 % RH for 5 hours and then the moisture-absorbing rate was calculated by the following equation.

$$\text{Moisture-absorbing rate (\%)} = (W_1 - W_0)/W_0 \times 100$$

$W_o$: Weight of the nonwoven fabric immediately after drying (g)

$W_i$; Weight of the nonwoven fabric after moisture absorption (g)

Example 1:

A super water and moisture absorbent fiber "BELLOASIS" of 10 dtex, 6 mm made by Kanebo Gohsen, Ltd. was continuously scattered uniformly on a tissue having a weight per unit area of 14 g/m$^2$ on a suction net by air laid method and laminated to make a sheet of 200 g/m$^2$. Then. water was sprayed in the state of mist on the moisture-absorbing layer and then a tissue of 14 g/m$^2$ was laminated on the moisture-absorbing layer to give a three layers structure. It was passed through a press roll to adjust the thickness to 1.0 mm and then dried in a hot air drier at 130 C. The resultant nonwoven fabric had a weight per unit area of 228 g/m$^2$, a thickness of 1.0 mm, a moisture content of 38 weight % and an apparent density of 0.228 g/cm$^3$.

The moisture-absorbing layer of this sample was adhered by self-adhering activity of "BELLOASIS" and the moisture-absorbing layer was adhered to the tissue of the surface sheet by 'BELLOASIS'. The moisture-absorbing rate of the high moisture absorbent nonwoven fabric structure was 35 weight %. The high moisture absorbent nonwoven fabric structure was dried at 120°C for 2 hours and the moisture-absorbing rate was again measured to be 35 weight %.

Example 2:

The fiber "BELLOASIS" 10 of dtex, 6 mm was scattered continuously on a spunbonded nonwoven fabric "Eleves" of 15 g/m$^2$ made by Unitika, Ltd. on a suction net uniformly by air laid method and laminated to make a sheet of 150 g/m$^2$. Then steam was blown on the moisture-absorbing layer and "Eleves" of 15 g/m$^2$ was laminated on the moisture-absorbing layer to give a three layers structure and it was passed through a press roll to a thickness of 0.7 mm and dried in a hot air drier at 130°C. The resultant nonwoven fabric had a weight per unit area of 180 g/m$^2$, a thickness of 0.7 mm, a water content of 30 weight % and an apparent density of 0.26 g/cm$^3$.

The moisture-absorbing layer of this sample was adhered by self-adhering activity of "BELLOASIS" and the moisture-absorbing layer was adhered to the surface sheet "Eleves" by "BELLOASIS". The moisture-absorbing rate of the high moisture absorbent nonwoven fabric structure was 33 weight %. The highly moisture absorbent nonwoven fabric structure was dried at 120 °C for 2 hours and the moisture-absorbing rate was again measured to be 31 weight %.

Example 3:

The fiber "BELLOASIS" of 10 dtex. 6 mm was scattered continuously on "Eleves" of 15 g/m$^2$ on a suction net uniformly by air laid method and laminated to make a sheet of 150 g/m$^2$. Then, water was sprayed in the state of mist on the moisture-absorbing layer and a polypropylene film of 20 g/m$^2$ was laminated on the moisture-absorbing layer to give a three layers structure and it was passed through a hot press roll to a thickness of 1.0 mm and dried in a hot air drier at 130°C. The resultant nonwoven fabric had a weight per unit area of 185 g/m$^2$. a thickness of 1.0 mm, a water content of 40 weight % and an apparent density of 0. 185 g/cm$^3$.

The moisture-absorbing layer of this sample was adhered by self-adhering activity of "BELLOASIS" and the moisture-absorbing layer was adhered to the surface sheet "Eleves" by "BELLOASIS" and the moisture-absorbing layer was also adhered to the polypropylene film by "BELLOASIS". The moisture-absorbing rate of the high moisture absorbent nonwoven fabric structure was 32 weight %. The high moisture absorbent nonwoven fabric structure was dried at 120 °C for 2 hours and the moisture-absorbing rate was again measured to be 31 weight %.

Example 4:

The fiber "BELLOASIS" of 10 dtex, 6 mm was scattered continuously on a tissue of 14 g/m$^2$ on a suction net uniformly by air laid method and laminated to make a sheet of 300 g/m$^2$. Then, water was sprayed in the state of mist on the moisture-absorbing layer and a tissue of 14 g/m$^2$ was laminated on the moisture-absorbing layer to give a three layers structure and it was passed through a press roll to a thickness of 0.8 mm and dried in a hot air drier at 120 °C. The resultant nonwoven fabric had a weight per unit area of 328 g/m$^2$, a thickness of 0.8 mm, a water content of 39 weight % and an apparent density of 0.410 g/cm$^3$.

The moisture-absorbing layer of this sample was adhered by self-adhering activity of "BELLOASIS" and the moisture-absorbing layer was adhered to the surface sheet "Eleves" by "BELLOASIS" and the moisture-absorbing layer was also adhered to the tissue of the surface sheet by "BELLOASIS". The moisture-absorbing rate of the high moisture absorbent nonwoven fabric structure was 36 weight %. The high moisture absorbent nonwoven fabric structure was dried at 120 °C for 2 hours and the moisture-absorbing rate was again measured to be 36 weight %.

Example 5:

80 weight % of the fiber BELLOASIS" of 10 dtex. 6 mm and 20 weight % of conifer pulp were scattered continuously on a tissue of 14 g/m$^2$ on a suction net uniformly by air laid method and laminated to make a sheet of 200 g/m$^2$. Then, water was sprayed in the state of mist on the moisture-absorbing layer and a tissue of 14 g/m$^2$ was laminated on the moisture-absorbing layer to give a three layers structure and it was passed through a press roll to a thickness of 0.6 mm and dried in a hot air drier at 120 °C. The resultant nonwoven fabric had a weight per unit area of 228 g/m$^2$, a thickness of 0.6 nm. a water content of 45 weight % and an apparent density of 0.380 g/cm$^3$.

The moisture-absorbing layer of this sample was adhered by self-adhering activity of "BELLOASIS" and the moisture-absorbing layer was adhered to the surface sheet "Eleves" by "BELLOASIS" and the moisture-absorbing layer was also adhered to the tissue of the surface sheet by "BELLOASIS". The moisture-absorbing rate of the high moisture absorbent nonwoven fabric structure was 29 weight %. The high moisture absorbent nonwoven fabric structure was dried at 120 °C for 2 hours and the moisture-absorbing rate was again measured to be 28 weight %.

Comparative Example 1:

50 weight % of the fiber "BELLOASIS" of 10 dtex, 6 mm and 50 weight % of conifer pulp were scattered continuously on a tissue of 14 g/m$^2$ on a suction net uniformly by air laid method and laminated to make a sheet of 200 g/m$^2$. Then, water was sprayed in the state of mist on the moisture-absorbing layer and a tissue of 14 g/m$^2$ was laminated on the moisture-absorbing layer to give a three layers structure and it was passed through a press roll to a thickness of 1. 0 mm and dried in a hot air drier at 130°C. The resultant nonwoven fabric had a weight per unit area of 228 g/m$^2$, a thickness of 1.0 mm, a water content of 35 weight % and an apparent density of 0.228 g/cm$^3$.

Though the moisture-absorbing layer of this sample was adhered by self-adhering activity of "BELLOASIS", the adhering activity was weak. Also. though the moisture-absorbing layer was adhered to the tissue of the surface sheet by "BELLOASIS", the adhering activity was weak. Furthermore, the moisture-absorbing rate of the high moisture absorbent fabric structure was as low as 18 weight %.

Comparative Example 2:

A super moisture absorbent fiber "N-38" of 4.4 dtex. 6 nm made by Toyobo Co., Ltd. was scattered continuously on a tissue of 40 g/m$^2$ on a suction net uniformly by air laid method and laminated to a web of 200 g/m$^2$. Then the web was stood at 30°C and 90 % RH for 10 minutes to wet "N-38" and then a tissue of 40 g/m$^2$ was laminated on the moisture-absorbing layer to give a three layers structure. It was passed through a press roll to a thickness of 1.0 mm and dried in a hot air drier at 130°C. "N-38" did not gel though moistened and no nonwoven fabric could be prepared.

Industrial Applicability

The high moisture absorbent nonwoven fabric structure of the present invention contains the high moisture absorbent fibers in a high mixing rate and therefore it is high in hygroscopicity and can be used in a small space as it is very thin. Furthermore, as it can be easily recycled by heat-treating the nonwoven fabric after moisturized, it can be used in various fields including drying agents and dehumidifying agents.

**Claims**

1. A high moisture absorbent nonwoven fabric structure consisting of a three layers structure comprising a first surface sheet, a moisture-absorbing layer consisting mainly of high moisture absorbent fibers and a second surface sheet which are laminated in order, wherein:

   - the fibers in the moisture-absorbing layer adhere each other and the moisture-absorbing layer and the surface sheets adhere each other by the self-adhering activity of the high moisture absorbent fibers which is expressed by absorbing water and/or moisture;
   - at least one of the surface sheets has air permeability;
   - the thickness of said high moisture absorbent nonwoven fabric structure is not more than 1,5 mm;
   - the water content of said nonwoven fabric structure is 20 to 45 weight %; and
   - the moisture-absorbing rate of said nonwoven fabric structure is at least 20 weight % under absolute dry condition at 20°C and 65 % relative humidity after 5 hours.

2. The high moisture absorbent nonwoven fabric structure according to claim 1, wherein said moisture-absorbing layer consists of high moisture absorbent fiber alone.

3. The high moisture absorbent nonwoven fabric structure according to claim 1 or 2, wherein said high moisture absorbent fiber is a high moisture absorbent fiber of a crosslinked sodium acrylate type.

4. The high moisture absorbent nonwoven fabric structure according to any of claims 1 to 3, wherein the apparent density is 0,05 to 0,8 $g/cm^3$.

5. A method for the preparation of a high moisture absorbent nonwoven fabric structure according to any of the preceding claims, comprising the steps that:

   - a surface sheet having air permeability is put on a net;
   - a fiber mixture mainly containing high moisture absorbent fibers is scattered continuously on the surface sheet, while sucked from net side to form a moisture-absorbing layer;
   - a moistening step is applied on the moisture-absorbing layer to gel the surface of the high moisture absorbent fiber;
   - another surface sheet is laminated on it to give a three layers structure; and
   - the laminate is pressed and dried to adhere the fibers in the moisture-absorbing layer each other and adhere the moisture-absorbing layer with the surface sheet.

**Patentansprüche**

1. Hohe Feuchtigkeit absorbierende Textilverbundstoffstruktur, die aus einer Dreilagenstruktur zusammengesetzt ist, umfassend eine erste Oberflächenschicht, eine feuchtigkeitsabsorbierende Lage, die hauptsächlich aus hohe Feuchtigkeit absorbierenden Fasern zusammengesetzt ist, und eine zweite Oberflächenschicht, die in Reihenfolge laminiert sind, wobei:

   - die Fasern in der feuchtigkeitsabsorbierenden Lage aneinander kleben und die feuchtigkeitsabsorbierende Lage und die Oberflächenschichten durch die Selbklebeaktivität der hohe Feuchtigkeit absorbierenden Fasern aneinander kleben, die durch absorbierendes Wasser und/oder Feuchtigkeit zum Ausdruck gebracht wird;
   - mindestens eine der Oberflächenschichten eine Luftdurchlässigkeit aufweist;
   - die Dicke der hohe Feuchtigkeit absorbierenden Textilverbundstoffstruktur nicht mehr als 1,5 mm beträgt;
   - der Wassergehalt der Textilverbundstoffstruktur 20 bis 45 Gew.-% beträgt; und

- der Feuchtigkeitsabsorptionsgrad der Textilverbundstoffstruktur bei absolut trockenem Zustand bei 20°C und 65%iger relativer Feuchtigkeit nach 5 Stunden mindestens 20 Gew.-% ist.

2. Hohe Feuchtigkeit absorbierende Textilverbundstoffstruktur nach Anspruch 1, bei der die feuchtigkeitsabsorbierende Lage einzig aus hohe Feuchtigkeit absorbierender Faser zusammengesetzt ist.

3. Hohe Feuchtigkeit absorbierende Textilverbundstoffstruktur nach Anspruch 1 oder 2, bei der die hohe Feuchtigkeit absorbierende Faser eine hohe Feuchtigkeit absorbierende Faser von einem vernetzten Natriumacrylattyp ist.

4. Hohe Feuchtigkeit absorbierende Textilverbundstoffstruktur nach einem der Ansprüche 1 bis 3, bei der die scheinbare Dichte 0,05 bis 0,8 gr/cm$^3$ beträgt.

5. Verfahren zur Anfertigung einer hohe Feuchtigkeit absorbierenden Textilverbundstoffstruktur nach einem der vorangehenden Ansprüche, umfassend die Schritte, dass:

   - eine Oberflächenschicht mit einer Luftdurchlässigkeit auf ein Netz gelegt wird;
   - ein Fasergemisch, das hauptsächlich hohe Feuchtigkeit absorbierende Fasern enthält, auf der Oberflächenschicht kontinuierlich verteilt wird, während sie von der Netzseite angesaugt wird, um eine feuchtigkeitsabsorbierende Lage zu bilden;
   - ein Befeuchtungsschritt auf die feuchtigkeitsabsorbierende Lage angewandt wird, um die Oberfläche der hohe Feuchtigkeit absorbierenden Faser zu gelieren;
   - eine weitere Oberflächenschicht darauf laminiert wird, so dass sich eine Dreilagenstruktur ergibt; und
   - das Laminat gepresst und getrocknet wird, um die Fasern in der feuchtigkeitsabsorbierenden Lage miteinander zu verkleben und die feuchtigkeitsabsorbierende Lage mit der Oberflächenschicht zu verkleben.

**Revendications**

1. Structure d'étoffe non tissée absorbant fortement l'humidité constituée par une structure à trois couches comprenant une première feuille de surface, une couche absorbant l'humidité constituée principalement par des fibres absorbant fortement l'humidité et une seconde feuille de surface qui sont stratifiées dans cet ordre, dans laquelle :

   - les fibres dans la couche absorbant l'humidité adhèrent les unes aux autres et la couche absorbant l'humidité et les feuilles de surface adhèrent l'une aux autres par l'activité auto-adhérente des fibres absorbant fortement l'humidité qui est exprimée par l'absorption d'eau et/ou d'humidité ;
   - au moins l'une des feuilles de surface présente une perméabilité à l'air ;
   - l'épaisseur de ladite structure d'étoffe non tissée absorbant fortement l'humidité n'excède pas 1,5 mm ;
   - la teneur en eau de ladite structure d'étoffe non tissée est de 20 à 45 % en poids ; et
   - le taux d'absorption d'humidité de ladite structure d'étoffe non tissée est d'au moins 20 % en poids dans une condition sèche absolue à 20 °C et 65 % d'humidité relative après 5 heures.

2. Structure d'étoffe non tissée absorbant fortement l'humidité selon la revendication 1, dans laquelle ladite couche absorbant l'humidité est constituée par une fibre absorbant fortement l'humidité unique.

3. Structure d'étoffe non tissée absorbant fortement l'humidité selon la revendication 1 ou 2, dans laquelle ladite fibre absorbant fortement l'humidité est une fibre absorbant fortement l'humidité de type acrylate de sodium réticulé.

4. Structure d'étoffe non tissée absorbant fortement l'humidité selon l'une quelconque des revendications 1 à 3, dans laquelle la masse volumique apparente est de 0,05 à 0,8 g/cm$^3$.

5. Procédé de préparation d'une structure d'étoffe non tissée absorbant fortement l'humidité selon l'une quelconque des revendications précédentes, comprenant les étapes telles que :

   - une feuille de surface présentant une perméabilité à l'air est placée sur un filet ;
   - un mélange de fibres contenant principalement des fibres absorbant fortement l'humidité est diffusé en continu sur la feuille de surface, tout en tant aspiré à partir du côté du filet pour former une couche absorbant l'humidité ;
   - une étape d'humidification est appliquée sur la couche absorbant l'humidité pour gélifier la surface de la fibre absorbant fortement l'humidité ;

- une autre feuille de surface est stratifiée sur celle-ci pour donner une structure à trois couches ; et
- le stratifié est pressé et séché pour faire adhérer les fibres et la couche absorbant l'humidité les unes à l'autre et faire adhérer la couche absorbant l'humidité à la feuille de surface.